# EUROPÄISCHE PATENTSCHRIFT

(11) **EP 2 441 155 B1**
(45) Veröffentlichungstag und Bekanntmachung des Hinweises auf die Patenterteilung: **24.04.2019**
(21) Anmeldenummer: 10722965.0
(22) Anmeldetag: 09.06.2010
(51) Int. Cl.: H02J 7/02, H02J 50/12, H02M 1/00

(54) **SCHALTUNGSANORDNUNG UND VERFAHREN ZUR INDUKTIVEN ENERGIEÜBERTRAGUNG**
DEVICE AND METHOD FOR INDUCTIVE ENERGY TRANSFER
DISPOSITIF ET PROCÉDÉ DE TRANSMISSION D'ÉNERGIE INDUCTIVE

(30) Priorität: 10.06.2009 EP 09007662; 10.06.2009 EP 09007667
(43) Veröffentlichungstag der Anmeldung: 18.04.2012
(73) Patentinhaber: Braun GmbH, 61476 Kronberg/Taunus (DE)
(72) Erfinder: JUNG, Philipp, 64347 Griesheim (DE); LEPPER, Joachim, 61250 Usingen (DE); LANGSDORF, Jan Christian, 61440 Oberursel (DE); HERZBERG, Lutz Ronald, 60437 Frankfurt/Main (DE); HOHMANN, Thomas, 63571 Gelnhausen (DE); PETZOLD, Herbert, 65185 Wiesbaden (DE)
(86) Internationale Anmeldenummer: PCT/EP2010/003461
(87) Internationale Veröffentlichungsnummer: WO 2010/142434

(56) Entgegenhaltungen:
- DE-A1- 19 841 972
- DE-A1- 19 934 850
- GB-A- 2 094 574
- JP-A- 3 270 655
- JP-A- 10 189 369
- US-A- 3 355 650

## Beschreibung

### Gebiet der Erfindung

Die Erfindung betrifft eine Schaltungsanordnung zur induktiven Energieübertragung für Elektrokleingeräte, beispielsweise für eine elektrische Zahnbürste oder einen elektrischen Rasierapparat.

### Hintergrund der Erfindung

Akkubetriebene Elektrokleingeräte werden üblicherweise an einer externen Ladestation aufgeladen. Besonders beliebt sind kontaktlose Ladestationen, die ein Netzteil aufweisen und elektrische Energie von der Ladestation in das Gerät induktiv übertragen. Dazu wird in der Ladestation durch einen Oszillator, der ein Spulenelement und ein Kondensatorelement aufweist, ein magnetisches Wechselfeld erzeugt, wobei das Spulenelement zugleich die Primärspule eines induktiven Übertragers bildet, und die Sekundärspule des Übertragers in dem zu ladenden Gerät angeordnet ist. Daher wird die Ladestation gewöhnlich als Primärseite, das zu ladende Gerät als Sekundärseite bezeichnet. Der Oszillator wird durch die Energieabgabe über das Magnetfeld des Übertragers gedämpft, sodaß das Netzteil entsprechend elektrische Energie nachliefern muß.

Moderne Ladestationen kennen üblicherweise drei Betriebszustände. Der erste Zustand ist der Betriebs-Modus, bei dem die Sekundärseite dauerhaft Energie nachfragt, beispielsweise zum Betreiben des Geräts oder zum Aufladen eines im Gerät eingebauten Akkumulators. Der zweite Zustand ist der einfache Standby-Modus, bei dem sich das Gerät nicht in der Ladestation befindet, also gar keine Energie nachgefragt wird. Der dritte Zustand ist der sogenannte erweiterte Standby-Modus, bei dem das Gerät sich in der Ladestation befindet aber nur gelegentlich Energie benötigt, beispielsweise weil der Akkumulator zwar vollständig geladen ist aber zur Kompensation der Selbstentladung oder des Eigenverbrauchs des Geräts gelegentlich nachgeladen werden muß. Im letztgenannten Fall soll die Ladestation je nach Bedarf zwischen dem einfachen Standby-Modus und dem Betriebs-Modus hin- und herschalten. Der jeweilige Betriebszustand der Ladestation (Primärseite) ist somit durch den Energiebedarf des Elektrokleingeräts (Sekundärseite) bestimmt.

Bekannt ist es, den Energiebedarf der Sekundärseite direkt an der Sekundärseite zu erfassen, eine entsprechende Information an die Primärseite zu übertragen und den Oszillator, d.h. beispielsweise die Basis-Emitter-Spannung eines im Oszillator arbeitenden Transistors, entsprechend einzustellen. Diese Lösung ist recht aufwendig, weil Übertragungsmittel für die Information von der Sekundärseite zur Primärseite benötigt werden. Alternativ könnte man den Energiebedarf der Sekundärseite dadurch ermitteln, daß die (primärseitige) Energieaufnahme des Oszillators gemessen und der Oszillator entsprechend gesteuert wird. Diese Variante ist jedoch wenig geeignet zur Einstellung mehrerer Betriebszustände, weil wegen der üblicherweise schwachen Kopplung zwischen der Primär- und der Sekundärseite des Übertragers die Energieaufnahme der Ladestation durch die Energieaufnahme des Geräts nur wenig beeinflußt wird.

Bekannt ist es, dass eine Schaltungsanordnung dazu dient, dass sie das Aufheizen einer elektrischen Energieübertragungseinheit in einem unbelasteten Zustand verhindern soll. Eine solche Schaltungsanordnung kann einen Colpitts-Oszillator und einen FET zwischen dem Colpitts-Oszillator und Masse aufweisen, wobei die Gate-Spannung des FET erniedrigt wird, wenn ein unbelasteter Zustand festgestellt wird und damit wird der Ausgangspegel der Schaltungsanordnung verringert. JP 03-270655 beschreibt allgemein eine solche Schaltungsanordnung.

GB 2 094 574 beschreibt ein induktives Ladeteil, das eine Gleichrichterdiode und einen davor geschalteten komplexen Widerstand aufweist.

DE 198 41 972 A1 beschreibt einen getakteten Shuntregler für einen Netztransformator. Dieser weist eine Gleichrichterbrücke mit vorgeschaltetem, komplexem Widerstand auf. Bei Detektion einer Überspannung oberhalb einer Schwellspannung schaltet ein Schmitt-Trigger den Gleichrichter kurz.

JP 10-189369 beschreibt ein induktives Ladeteil, das primärseitig in Serie geschaltete Spulen aufweist, die aus zwei getrennten Spulenkörpern aufgebaut ist, wobei eine Oszillatorspule in einem Innenbereich der primärseitigen Übertragungsspule sitzt.

Die Druckschrift DE 199 34 850 A1 offenbart ein Kondensatornetzteil, das als Konstantstromquelle dient, wobei sich die Größe des eingespeisten Konstantstromes zumindest am minimalen Strombedarf aller dauerbetriebenen Verbraucher und am maximalen Strombedarf aller eingeschalteten Verbraucher orientiert.

### Aufgabe der Erfindung

Aufgabe der vorliegenden Erfindung ist es, aus Gründen der Energieeffizienz (vgl. EU-Direktive 205/32) die Leistungsaufnahme der Schaltungsanordnung im Standby-Modus zu minimieren, und daher eine Schaltungsanordnung zur induktiven Energieübertragung anzugeben, die in Abhängigkeit vom Energiebedarf der Sekundärseite auf einfache Weise in einen Betriebszustand mit verringerter Leistungsaufnahme versetzt werden kann.

### Erfindungsgemäße Lösung

Diese Aufgabe wird durch eine Schaltungsanordnung zum induktiven Übertragen von Energie gemäß Anspruch 1 gelöst.

Das Netzteil weist einen kapazitiven Vorwiderstand, einen Gleichrichter und einen Lastwiderstand auf, und besitzt einen komplexen Eingangswiderstand, der im wesentlichen durch den Lastwiderstand und den kapazitiven Vorwiderstand bestimmt ist. Der Lastwiderstand ist in Abhängigkeit von der Belastung des Oszillators veränderbar, sodaß die Wirkleistungsaufnahme der Schaltungsanordnung bei geringer Belastung des Oszillators reduziert werden kann (Standby-Modus).

Zum Verändern des ohmschen Anteils des komplexen Eingangswiderstands kann bei einer ersten Variante der Schaltungsanordnung mindestens ein ohmscher Widerstand und ein steuerbarer Schalter vorgesehen sein, dessen Schaltstrecke so geschaltet ist, daß der Wirkwiderstand der aus dem mindestens einen ohmschen Widerstand und dem Schalter gebildeten Anordnung umschaltbar ist. Eine Reihenschaltung aus einem ohmschen Widerstand und einem elektronischen Schalter kann am Ausgang des Netzteils angeordnet sein. Im Standby-Modus ist der Schalter geschlossen, sodaß der Ausgang des Netzteils durch einen vergleichsweise kleinen Widerstand abgeschlossen ist, und sich die Ausgangsspannung des Netzteils im Vergleich zum Betriebs-Modus, in dem der Schalter geöffnet ist, entsprechend verringert. Daher reduziert sich auch die Wirkleistungsaufnahme der Schaltungsanordnung.

Der Oszillator weist in an sich bekannter Weise ein aktives Element in Form eines Transistors auf. Er besteht vorzugsweise aus einem Colpitts- oder Hartley-Oszillator in Basisschaltung. Die Schaltungsanordnung ist vorteilhafterweise so ausgelegt, daß auch im Standby-Modus der Oszillator schwingt, allerdings mit einer im Vergleich zum Betriebs-Modus verringerten Leistungsaufnahme. Dies reicht aus, um die Leistungsaufnahme der Schaltungsanordnung im gewünschten Maße zu verringern. Auch die Einrichtung zum Detektieren der induktiven Belastung des Oszillators durch die Sekundärseite ist im Standby-Modus in Betrieb, sodaß ein Auftreten eines erhöhten Leistungsbedarfs auf der Sekundärseite sofort detektiert werden und die Leistung des Oszillators unverzüglich angepaßt werden kann. Alternativ kann die Einrichtung zum Detektieren der Belastung des Oszillators und/oder der Oszillator im Standby-Modus zeitgesteuert aus- und eingeschaltet werden, um die Leistungsaufnahme der Schaltungsanordnung noch weiter zu verringern.

Die Einrichtung zum Detektieren der induktiven Belastung des Oszillators ermittelt die Belastung des Oszillators und somit den Leistungsbedarf der Sekundärseite anhand einer im Oszillator auftretenden elektrischen Größe, vergleicht diese mit einem Referenzwert, und steuert den steuerbaren Schalter so an, daß der komplexe Eingangswiderstand des Netzteils in Abhängigkeit von der Belastung des Oszillators erforderlichenfalls verändert wird. Die elektrische Größe ist beispielsweise die Amplitude der Kollektorspannung oder der Basisspannung des Transistors des Oszillators und es wird nur die Amplitude oder ein Mittelwert der Amplitude der negativen Halbschwingung im Oszillator erfaßt. Die Amplitude der negativen Halbwelle der Oszillatorschwingung verändert sich nämlich besonders stark in Abhängigkeit von der sekundärseitigen Belastung.

Die Wirkleistungsaufnahme des Netzteils wird dadurch verkleinert, daß mittels eines steuerbaren Schalters der Ausgang des Netzteils mit einem vergleichsweise kleinen Widerstand abgeschlossen wird. Der Leistungsbedarf der Sekundärseite wird aus einer elektrischen Größe ermittelt, die im Oszillator detektiert wird. Dazu wird die Amplitude oder ein Mittelwert der Amplitude der negativen Halbschwingung im Oszillator erfaßt, mit einem Referenzwert verglichen, und erforderlichenfalls der komplexe Eingangswiderstand des Netzteils verändert.

### Kurzbeschreibung der Figuren

Die Erfindung wird anhand von Ausführungsbeispielen erläutert, die in den Zeichnungen dargestellt sind. Weitere Varianten der Schaltungsanordnung sind in der Beschreibung erwähnt. Es zeigt:
Fig. 1 ein Blockschaltbild einer Schaltungsanordnung zur induktiven Energieübertragung;
Fig. 2 eine Schaltungsanordnung mit einem Hartley-Oszillator gemäß der vorliegenden Erfindung;
Fig. 3 eine weitere, nicht erfindungsgemäße Schaltungsanordnung mit einem Colpitts-Oszillator;
Fig. 4 noch eine weitere, nicht erfindungsgemäße Schaltungsanordnung mit einem Colpitts-Oszillator.

### Ausführliche Beschreibung der Figuren

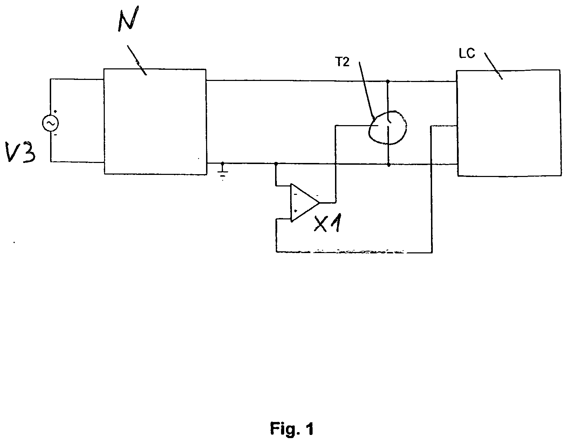

Das Blockschaltbild gemäß Fig. 1 zeigt eine Schaltungsanordnung mit einem Netzteil N und einem selbstschwingenden Oszillator LC, der der Erzeugung eines magnetischen Wechselfelds dient. Der Oszillator weist eine Spule auf, die der induktiven Übertragung von elektrischer Energie aus dem Oszillator LC (Primärseite) an einen in der Figur nicht dargestellten Verbraucher (Sekundärseite) dient, beispielsweise ein Elektrokleingerät, das zu diesem Zweck eine Empfangsspule enthält, die mit der Spule des Oszillators gekoppelt werden kann. Der Oszillator bezieht elektrische Energie aus dem Netz V3 über das Netzteil N, das einen komplexen Eingangswiderstand hat. Ferner weist die Schaltungsanordnung einen steuerbaren Schalter T2 und eine Einrichtung X1 zum Detektieren der Belastung des Oszillators LC auf, die den Schalter T2 steuert. Durch den steuerbaren Schalter T2 kann der komplexe Eingangswiderstand des Netzteils N umgeschaltet werden, sodaß die Schaltungsanordnung in einem Standby-Modus eine geringere Wirkleistung aus dem Netz V3 aufnimmt als in einem Betriebs-Modus. Der steuerbare Schalter T2 kann beispielsweise durch ein Relais oder einen Transistor realisiert sein, der elektrisch oder optisch ansteuerbar ist.

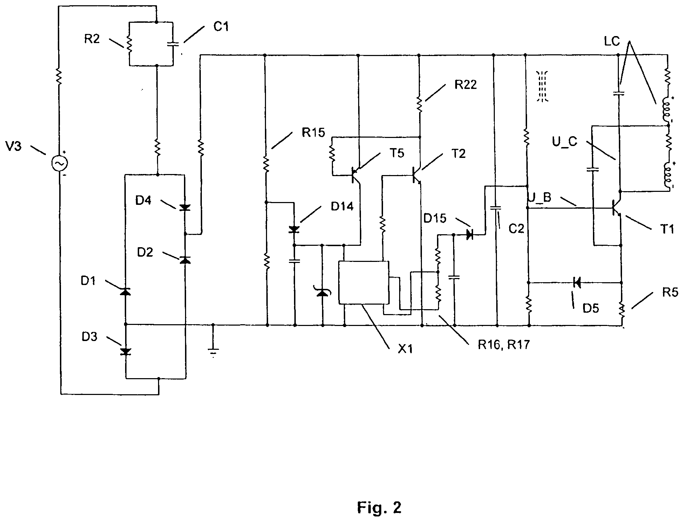

Bei der in Fig. 2 dargestellten Schaltungsanordnung enthält das Netzteil einen Kondensator C1 als kapazitiven Vorwiderstand und eine Gleichrichterbrücke mit Dioden D1, D2, D3, D4, die zusammen mit einem Kondensator C2 aus der Netzwechselspannung eine geglättete Gleichspannung erzeugt, mit der der Oszillator LC betrieben wird. Dem Kondensator C1 ist ein Widerstand R2 parallelgeschaltet, der dafür sorgt, daß der Kondensator C1 entladen wird, nachdem das Netzteil N vom Netz V3 getrennt wurde. Der Widerstand R2 ist relativ hochohmig im Vergleich zum Wirkwiderstand des Kondensators C1, sodaß der komplexe Eingangswiderstand des Netzteils N im Wesentlichen durch den kapazitiven Widerstand des Kondensators C1 bestimmt ist.

Soll die Schaltungsanordnung in den Standby-Modus versetzt werden, wird der kapazitive Vorwiderstand über die Gleichrichterbrücke und einen Transistor T2 und einen Widerstand R22 mit Masse verbunden. Dadurch wird die Leistungsaufnahme der Schaltungsanordnung aus dem Netz vom Wirkleistungsbereich in Richtung des Blindleistungsbereichs verschoben, und somit eine Reduzierung der Wirkleistungsaufnahme aus dem Netz erreicht. Ist der Transistor T2 vollständig durchgeschaltet, so wird der Strom im Wesentlichen durch den Widerstand R22 und den Kondensator C1 begrenzt. Wenn der Widerstandswert von R22 Null ist, wird der Oszillator von der Energiezufuhr vollständig abgeschnitten. Das Netz erfährt dann eine rein kapazitive Blindlast. Vorzugsweise ist jedoch der Widerstand R22 so dimensioniert, daß sich bei durchgeschaltetem Transistor T2 eine Spannung am Kondensator C2 einstellt, die zum Betrieb des Oszillators immer noch ausreicht, wobei dieser dann allerdings nur noch mit reduzierter Amplitude schwingt.

Die Schaltungsanordnung enthält als Oszillator LC einen Hartley-Oszillator in Basisschaltung, der als aktives Element einen Transistor T1 aufweist. Zur Erkennung der Belastung des Oszillators durch die Sekundärseite ist eine Einrichtung X1 vorgesehen, beispielsweise ein Mikrocontroller, sowie eine Diode D15 und ein Spannungsteiler, der durch die Widerstände R16 und R17 gebildet ist. Am einen Ende des Spannungsteilers R16, R17 liegt die negative Halbwelle der Basisspannung U_B des Transistors T1 an. Diese Spannung U_B wird über die Diode D15 herangeführt und repräsentiert die Belastung des Oszillators LC. Am anderen Ende des Spannungsteilers R16, R17 liegt eine positive Referenzspannung an, die vom Mikrocontroller X1 erzeugt wird. Die Spannung am Mittenabgriff des Spannungsteilers R16, R17 wird dem Mikrocontroller X1 zugeführt. Die negative Basisspannung U_B des Transistors T1 wird mittels des Spannungsteilers R16, R17 in den positiven Spannungsbereich transformiert, sodaß sie vom Mikrocontroller X1 mit einem Referenzwert verglichen werden kann. Abhängig vom Ergebnis dieses Vergleichs steuert der Mikrocontroller X1 den Transistor T2 an. Statt der negativen Halbwelle der Basisspannung kann auch die negative Halbwelle der Kollektorspannung U_C ausgewertet werden.

Der Mikrocontroller X1 wird über einen Spannungsteiler mit einem Widerstand R15, eine Diode D14 und einen Transistor T5 auch dann noch aus dem Netzteil mit Energie versorgt, wenn der Transistor T2 durchgeschaltet ist, und sich die Schaltungsanordnung im Standby-Modus befindet. Sobald er einen erhöhten Energiebedarf der Sekundärseite feststellt, wird er den Transistor T2 wieder sperren. Der Mikrocontroller X1 kann mit einem Steuerprogramm versehen sein, das den Transistor T2 beispielsweise gemäß einem vorgegebenen Zeitschema ein- und ausschaltet.

Eine andere Ausführung der oben beschriebenen Schaltungsanordnung verwendet statt des Hartley-Oszillators einen Colpitts-Oszillator, und/oder statt eines Mikrokontrollers eine diskrete Schaltung zur Erkennung der Belastung des Oszillators.

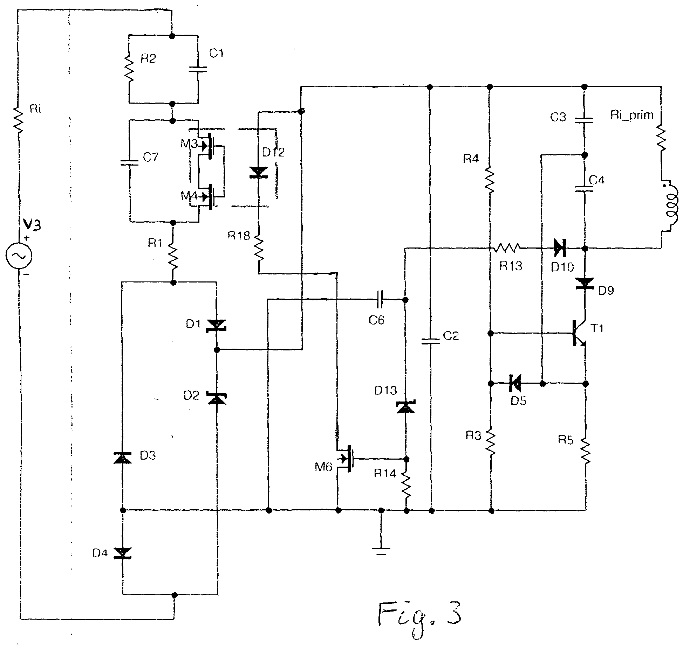

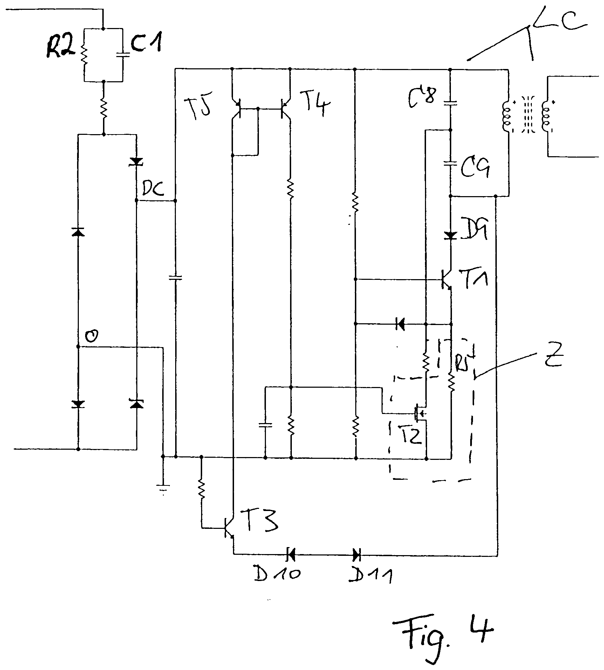

Zum Verändern des komplexen Eingangswiderstands des Netzteils kann zusätzlich eine Schaltungsanordnung verwendet werden, wie sie beispielsweise in Fig. 3 oder 4 dargestellt ist.

Bei der in Fig. 3 dargestellten nicht erfindungsgemäßen Schaltungsanordnung enthält das Netzteil einen komplexen Eingangswiderstand, dessen kapazitiver Anteil in Abhängigkeit von der Belastung des Oszillators verändert werden kann. Das Netzteil enthält einen kapazitiven Vorwiderstand und eine Gleichrichterbrücke mit Dioden D1, D2, D3, D4, die zusammen mit einem Kondensator C2 aus der Netzwechselspannung eine geglättete Gleichspannung erzeugt, mit der der Oszillator betrieben wird. Der kapazitive Vorwiderstand weist einen Kondensator C7 und einen Kondensator C1 auf, dem ein Widerstand R2 parallelgeschaltet ist, der dafür sorgt, daß der Kondensator C1 entladen wird, nachdem das Netzteil N vom Netz V3 getrennt wurde. Dem Kondensator C7 ist ein elektronischer Schalter parallelgeschaltet, der aus zwei hintereinandergeschalteten Transistoren M3, M4 besteht und Teil eines Optokopplers ist. Die Parallelschaltung aus dem Kondensator C1 und dem Widerstand R2 ist in Reihe mit der Parallelschaltung aus dem Kondensator C7 und den Transistoren M3, M4 geschaltet. Der Widerstand R2 ist relativ hochohmig im Vergleich zum Wirkwiderstand des Kondensators C1. Der komplexe Eingangswiderstand des Netzteils N ist im Wesentlichen durch den kapazitiven Widerstand des Kondensators C1 bestimmt ist, wenn der elektronische Schalter geschlossen ist, bzw. durch den kapazitiven Widerstand der beiden hintereinandergeschalteten Kondensatoren C1 und C7, wenn der elektronische Schalter geöffnet ist.

Soll die Schaltungsanordnung in den Standby-Modus versetzt werden, wird der elektronische Schalter geöffnet, d.h. die Diode D12 des Optokopplers ausgeschaltet. Dadurch wird die Wirkleistungsaufnahme der Schaltungsanordnung aus dem Netz verkleinert, weil der Wirkwiderstand der beiden hintereinandergeschalteten Kondensatoren C1, C7 wesentlich größer ist als der Wirkwiderstand des Kondensators C1. Das Netzteil nimmt jetzt fast nur noch Blindleistung auf. Vorzugsweise sind die Kondensatoren C1, C7 so dimensioniert, daß sich im Standby-Modus eine Spannung am Kondensator C2 einstellt, die zum Betrieb des Oszillators immer noch ausreicht, wobei dieser dann allerdings nur noch mit reduzierter Amplitude schwingt.

Die Schaltungsanordnung enthält als Oszillator einen Colpitts-Oszillator in Basisschaltung, der als aktives Element einen Transistor T1 aufweist. Zur Erkennung der Belastung des Oszillators durch die Sekundärseite ist eine Schaltung vorgesehen, die zwei Dioden D10, D13, zwei Widerstände R13, R14, einen Kondensator C6 und einen Schalttransistor M6 aufweist. Die Kathode der Diode D10 ist mit dem Kollektor des Transistors T1 verbunden. An der Anode der Diode D10 tritt die negative Halbwelle der Kollektorspannung U_C des Transistors T1 auf. Diese Spannung ist repräsentativ für die Belastung des Oszillators LC. Statt der negativen Halbwelle der Kollektorspannung kann auch die negative Halbwelle der Basisspannung U_B ausgewertet werden. Die Anode der Diode D10 ist über den Widerstand R13 mit dem einen Ende des Kondensators C6 und der Kathode der Diode D13 verbunden. Das andere Ende des Kondensators C6 ist mit Masse verbunden. Die Anode der Diode D13 ist mit dem Steueranschluß des Schalttransistors M6 und über den Widerstand R14 mit Masse verbunden. Die Schaltstrecke des Schalttransistors M6 ist in Reihe mit der Diode D12 des Optokopplers und mindestens einem Strombegrenzungswiderstand R18 geschaltet.

Der Schalttransistor M6 ist nur dann gesperrt, wenn an seinem Steueranschluß eine hinreichend große negative Spannung anliegt. Bei geringer Belastung des Oszillators wird über die Dioden D10 und D13 und den Widerstand R13 eine hinreichend große negative Spannung dem Steueranschluß des Schalttransistors M6 zugeführt, was zur Folge hat, daß die Diode D12 des Optokopplers ausgeschaltet ist, die Transistoren M3, M4 des elektronischen Schalters gesperrt sind, und der komplexe Eingangswiderstand einen großen Wert annimmt.

Eine erfindungsgemäße Variante der oben beschriebenen Schaltungsanordnung verwendet zum Verändern des komplexen Eingangswiderstands des Netzteils statt des Optokopplers und Kondensators C7 eine Reihenschaltung aus einem Transistor T2 und einem Widerstand R22 parallel zum Kondensator C2, wie sie in Fig. 2 dargestellt ist.

Fig. 4 zeigt eine weitere nicht erfindungsgemäße Schaltungsanordnung mit einem Colpitts-Oszillator in Basisschaltung. Diese Schaltungsanordnung ist dafür ausgelegt, die negative Spannungsamplitude der Schwingung im Oszillator LC zu detektieren. Wenn die negative Spannungsamplitude betragsmäßig einen vorbestimmten Wert übersteigt, also im Fall des unbelasteten Oszillators LC, wird ein Zweig mit einer Zener-Diode D10 und einer Diode D11 leitend, und ein Transistor T3 schaltet durch. Die Transistoren T4 und T5 können dann ebenfalls durchschalten, wenn deren Basis-Emitter-Spannungen betragsmäßig einen vorbestimmten Wert überschreiten. Die beiden Transistoren T4 und T5 steuern einen Feldeffekt-Transistor T2, dessen Schaltstrecke parallel zu einem Emitterwiderstand R5 geschaltet ist. Wenn T2 durchschaltet, wird der Wirkwiderstand Z am Emitter des Transistors T1 verhältnismäßig klein, sodaß die Energiezufuhr im Oszillator LC maximal wird. Der kapazitive Vorwiderstand C1 des Netzteils ist jedoch nicht für eine derartig große Leistung ausgelegt, sodaß sich die Ausgangsspannung des Netzteils und damit auch die Wirkleistungsaufnahme der Schaltungsanordnung verringert, weil der Ausgang des Netzteils jetzt mit einem zu kleinen Widerstand abgeschlossen ist.

Nimmt die negative Spannungsamplitude betragsmäßig im Vergleich zu einem Referenzwert, der durch die Zener-Diode D10 bestimmt ist, ab, ist dies ein Zeichen für eine stärkere Dämpfung, also für einen höheren sekundärseitigen Energiebedarf. Der Transistor T2 sperrt und der Wirkwiderstand Z am Emitter wird vergleichsweise groß. Dies ist der Betriebs-Zustand der Schaltungsanordnung, in dem die Leistungsaufnahme des Oszillators auf den kapazitiven Vorwiderstand C1 des Netzteils abgestimmt ist, und maximale Leistung an die Sekundärseite übertragen wird.

Eine Diode D9 am Kollektor des Transistors T1 unterbindet einen möglichen Stromrückfluß in Sperrichtung des Transistors T1, der zu Lasten des Diodenzweigs D10, D11 gehen würde, unterstützt also die Auswertbarkeit der negativen Spannungsamplitude im Oszillator LC.

Weiter wird ein nicht beanspruchtes Verfahren zum induktiven Übertragen von Energie von einer Schaltungsanordnung (Primärseite) zu einem Elektrokleingerät (Sekundärseite) offenbart, wobei die Schaltungsanordnung einen Oszillator aufweist zum Erzeugen und Abstrahlen eines magnetischen Wechselfelds, und der Leistungsbedarf der Sekundärseite von einer elektrischen Größe, die im Oszillator detektierbar ist, ermittelbar ist. Die Schaltungsanordnung weist ferner ein Netzteil mit einem komplexen Eingangswiderstand auf, das den Oszillator mit Energie versorgt, und eine Einrichtung zum Detektieren der induktiven Belastung des Oszillators und zum Verändern des komplexen Eingangswiderstands des Netzteils in Abhängigkeit von der Belastung des Oszillators, wobei bei geringer Belastung des Oszillators durch Verändern des komplexen Eingangswiderstands die Wirkleistungsaufnahme des Netzteils verkleinert wird. Die Wirkleistungsaufnahme des Netzteils wird verkleinert, indem mittels eines elektronischen Schalters der Ausgang des Netzteils mit einem vergleichsweise kleinen Widerstand überbrückt wird. Der Leistungsbedarf der Sekundärseite wird aus der Amplitude oder dem Mittelwert der negativen Halbschwingung an einem aktiven Element (Transistor) des Oszillators ermittelt.

Alle Varianten der beschriebenen Schaltungsanordnungen sind besonders geeignet zum Einsatz in induktiven Ladestationen für akkumulatorbetriebene Elektrokleingeräte wie elektrische Zahnbürsten, Rasierapparate oder Kommunikationsgeräte, wie beispielsweise tragbare Telefone.

## Patentansprüche

1. Schaltungsanordnung zum induktiven Übertragen von Energie mit einem Oszillator (LC), einem Netzteil (N), das den Oszillator (LC) mit Energie versorgt, und mit einer Einrichtung (X1) zum Detektieren der induktiven Belastung des Oszillators wobei das Netzteil einen komplexen Eingangswiderstand aufweist und die Einrichtung (X1) zusätzlich zum Verändern des komplexen Eingangswiderstands des Netzteils (N) in Abhängigkeit von der Belastung des Oszillators (LC) eingerichtet ist, wobei das Netzteil einen kapazitiven Vorwiderstand (C1, R2), einen Gleichrichter (D1, D2, D3, D4) und einen Lastwiderstand (R22, T2) aufweist, wobei der komplexe Eingangswiderstand des Netzteils im wesentlichen durch den Lastwiderstand (R22, T2) und den kapazitiven Vorwiderstand (C1, R2) bestimmt ist, wobei der Lastwiderstand (R22, T2) in Abhängigkeit von der Belastung des Oszillators (LC) veränderbar ist, sodass die Wirkleistungsaufnahme der Schaltungsanordnung bei geringer Belastung des Oszillators (LC) reduziert wird, und der Oszillator eine aktives Element in Form eines Transistors (T1) aufweist,
**dadurch gekennzeichnet dass**
der Lastwiderstand durch mindestens einen zusätzlichen Widerstand (R22) und die Schaltstrecke eines steuerbaren Schalters (T2) gebildet ist, und der ohmsche Widerstand der aus dem mindestens einen Widerstand (R22) und dem Schalter (T2) gebildeten Anordnung umschaltbar ist und die Einrichtung (X1) zum Detektieren der induktiven Belastung des Oszillators die Belastung des Oszillators (LC) anhand der Amplitude oder des Mittelwerts der Amplitude der negativen Halbschwingung am Kollektoranschluss oder am Basisanschluss des Transistors (T1) ermittelt.

2. Schaltungsanordnung nach Anspruch 1, **dadurch gekennzeichnet, dass** der Oszillator (LC) ein Hartley- oder Colpittsoszillator ist.

## Claims

1. Circuit arrangement for inductively transferring energy with an oscillator (LC), a power supply (N), which supplies the oscillator (LC) with energy, and with means (X1) for detecting the inductive load of the oscillator, wherein the power supply has a complex input resistance and the means (X1) is additionally configured to change the complex input resistance of the power supply (N) depending on the load of the oscillator (LC), wherein the power supply has a capacitive series resistor (C1, R2), a rectifier (D1, D2, D3, D4) and a load resistor (R22, T2), wherein the complex input resistance of the power supply is substantially determined by the load resistor (R22, T2) and the capacitive series resistor (C1, R2), wherein the load resistor (R22, T2) can be changed depending on the load of the oscillator (LC) so that the active power consumption of the circuit arrangement at low load of the oscillator (LC) is reduced, and the oscillator has an active element in the form of a transistor (T1),
**characterized in that**
the load resistance is formed by at least one additional resistor (R22) and the switching path of a controllable switch (T2), and the ohmic resistance of the arrangement formed of the at least one resistor (R22) and the switch (T2) is switchable and the means (X1) for detecting the inductive load of the oscillator determines the load of the oscillator (LC) on the basis of the amplitude or the average of the amplitude of the negative half-wave at the collector terminal or at the base terminal of the transistor (T1).

2. Circuit arrangement according to claim 1, **characterized in that** the oscillator (LC) is a Hartley or Colpitts oscillator.

## Revendications

1. Circuit pour le transfert par induction d'énergie comprenant un oscillateur (LC), un bloc d'alimentation (N) qui alimente en énergie l'oscillateur (LC) et comprenant un dispositif (X1) pour détecter la charge par induction de l'oscillateur, dans lequel le bloc d'alimentation a une résistance d'entrée complexe et le dispositif (X1) est aménagé en outre pour modifier la résistance d'entrée complexe du bloc d'alimentation (N) en fonction de la charge de l'oscillateur (LC), dans lequel le bloc d'alimentation comporte une résistance en série capacitive (C1, R2), un redresseur (D1, D2, D3, D4) et une résistance de charge (R22, T2), dans lequel la résistance d'entrée complexe du bloc d'alimentation est essentiellement déterminée par la résistance de charge (R22, T2) et la résistance en série capacitive (C1, R2), dans lequel la résistance de charge (R22, T2) est modifiable en fonction de la charge de l'oscillateur (LC), de sorte que la puissance active absorbée par le circuit soit réduite à faible charge de l'oscillateur (LC) et l'oscillateur comprend un élément actif sous la forme d'un transistor (T1),
**caractérisé en ce que**
la résistance de charge est formée par au moins une résistance supplémentaire (R22) et le trajet de commutation d'un commutateur contrôlable (T2) et la résistance ohmique de l'agencement constitué de l'au moins une résistance (R22) et du commutateur (T2) peut être commutée et le dispositif (X1) pour la détection de la charge par induction de l'oscillateur détermine la charge de l'oscillateur (LC) à l'aide de l'amplitude ou la moyenne de l'amplitude de l'alternance négative à la borne du collecteur ou à la borne de base du transistor (T1).

2. Circuit selon la revendication 1, **caractérisé en ce que** l'oscillateur (LC) est un oscillateur Hartley ou Colpitts.
